**Europäisches Patentamt**

**European Patent Office**

**Office européen des brevets**

(19)

(11) Publication number: **0 120 642**
**A1**

(12)

# EUROPEAN PATENT APPLICATION

(21) Application number: **84301655.1**

(22) Date of filing: **12.03.84**

(51) Int. Cl.³: **A 01 G 9/10**

(30) Priority: **17.03.83 CA 423844**

(43) Date of publication of application:
**03.10.84 Bulletin 84/40**

(84) Designated Contracting States:
**AT BE CH DE FR GB IT LI LU NL SE**

(71) Applicant: **Wiesinger, Frank**
**41 Wagonwheel Crescent**
**Langley British Columbia V3A 7N6(CA)**

(72) Inventor: **Wiesinger, Frank**
**41 Wagonwheel Crescent**
**Langley British Columbia V3A 7N6(CA)**

(74) Representative: **Arthur, Bryan Edward et al,**
**Withers & Rogers 4 Dyer's Buildings Holborn**
**London EC1N 2JT(GB)**

(54) **Method and apparatus for cultivating seedlings.**

(57) There is described an apparatus for cultivating seedlings, the apparatus including a plurality of cells connectable to one another to form an integral row of cells, each of the cells being open at at least one end thereof for receiving a seed and a growth supporting soil therein to promote the germination of a seedling from the seed but without any interlocking of the seedling roots.

FIG.1

EP 0 120 642 A1

The present invention relates to a method and apparatus for cultivating seedlings and more particularly to the use of a multicellular magazine structure which facilitates seedling growth without root interlace and which further facilitates the mechanization of the seedling transplanting process.

Typically, seedlings are grown in flats of soil or peat. When the seedlings have attained a sufficient size, the flats are broken up and the seedlings are pulled apart for transplanting. During the growth stage, the roots of the seedlings interlace such that upon being pulled apart, root damage leading to transplant shock commonly occurs with the result that seedling losses can be significant. This process is, moreover, labour intensive and therefore costly.

To overcome this problem, it has been found advantageous to cultivate each seedling in its own cellular structure to prevent root interlace and to facilitate transplanting in an economical fashion with a minimum of transplant shock.

It is therefore an object of the present invention to provide a new and improved method and apparatus for cultivating seedlings which obviates and mitigates from the disadvantages of prior seedling cultivation systems.

According to the present invention, then, there is provided an apparatus for cultivating seedlings comprising a plurality of cells connectable to one another to form an integral row of cells, each of the cells being open at at least one end thereof for receiving a seed and a growth supporting medium therein to promote the growth of the seedling from the seed without interlocking of the seedling roots.

According to another aspect of the present invention, there is also provided a method of cultivating seeds and transplanting the seedlings therefrom to a transplant container comprising the steps of depositing a seed and a growth supporting medium into self-contained cells connected to one another to form a row of cells, the cells being open at at least one end thereof, promoting the growth of a seedling from the seed, and transplanting the seedlings to the transplant container for further growth thereof.

Embodiments of the present invention will now be described in greater detail and will be better understood when read in conjunction with the following drawings in which:

Figure 1 is a perspective view illustrating one embodiment of a cellular structure for cultivating seedlings as will be described hereinbelow;

Figure 2 is a perspective view illustrating a further embodiment of a cellular structure for cultivating seedlings; and

Figure 3 is a perspective view illustrating yet another cellular structure for cultivating seedlings.

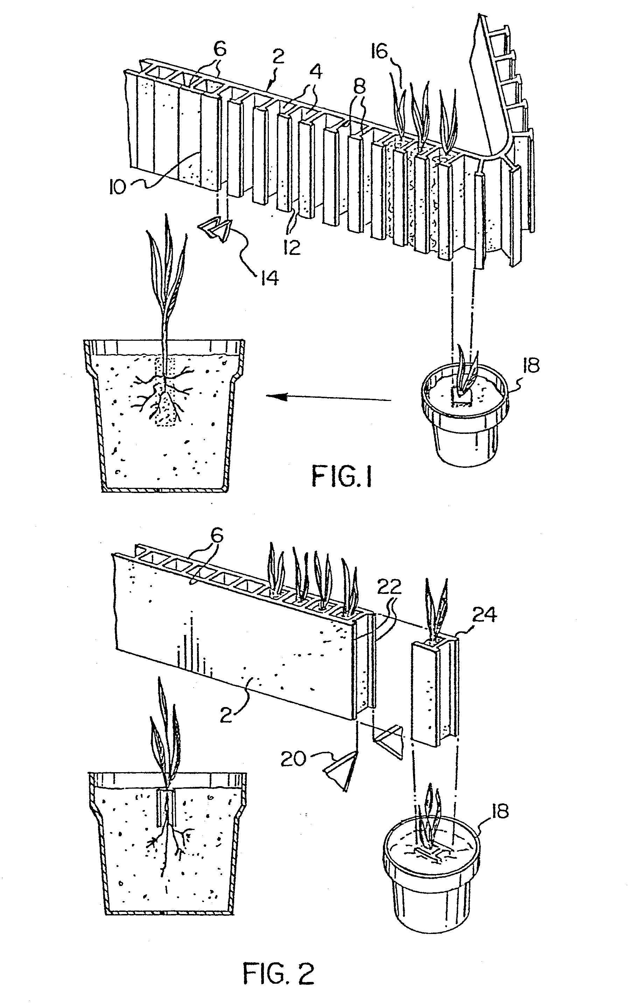

With reference now to Figure 1, there is illustrated a cellular structure or magazine 2 of micro containers or cells 4 aligned in a row. Each of the cells is to be filled with a growth supporting medium such as peat moss or soil. A single seed is implanted in each cell from which a seedling will eventually germinate.

Magazine 2 comprises a pair of spaced apart longitudinally extending sidewalls 6 and transversely extending partitioning walls 8 which subdivide the space between walls 6 into individual cells 4. The cells are open at each end to promote drainage and to allow the seedling roots to spread out upon transplanting. If desired, however, the lower ends of each cell may be sealed by a strip of material (not shown) which may be glued or otherwise attached to the lower edges of walls 6 and 8.

The cells may be formed to any desired length, usually in the one to two inch range and will typically have transverse dimensions in the 1/8 to 1/4 inch range. The precise cross-sectional shape of each cell when viewed in plan is not important although for manufacturing purposes, the substantially rectangular configuration shown in Figure 1 is the most economical to produce.

A relatively inexpensive commercially available material from which magazines 2 may be easily derived is available from Coroplast Limited of Montreal, Quebec.

Called COROPLAST, this cellular material of polypropylene, used for packaging and advertising panels, comes in sheets four feet by eight feet in size. The sheets may be cut into strips of any desired width to produce magazines 2. The width of each strip will determine the length of cells 4 and is typically therefore in the 1 to 2 inch range although narrower or wider strips may be cut if desired or required.

As shown, one of walls 6 is precut as at 10 to form a single lengthwise incision in each cell 4 or as at 12 to actually remove a wall segment from each cell. A double-bladed knife 14 shown schematically in Figure 1 may be used for this purpose. The cells are then filled with peat or soil and a seed implanted therein.

When the seedlings are ready for transplanting, magazine 2 may be bent progressively along its length as shown to cause a local spreading of incised wall 6 opposite the point of flexure to facilitate the removal of the seedling and its associated root plug for transplanting to a transplant pot or container 18. As will be appreciated, transplant shock is reduced to a minimum as the seedling roots are relatively undisturbed during removal from cell 4 and remain surrounded by the original plug of soil even after transplanting. In this fashion, each magazine is emptied of its contents and may, depending on its condition, be subsequently reused.

The cutting of wall 6 as disclosed above may be done after the planting and growth stages.

With reference now to Figure 2, transplanting may alternatively and advantageously be performed by actually cutting the individual cells 4 apart. To this end, a knife 20 shown schematically in Figure 2 may be used to cut walls 6 as at 22 to produce a channel-shaped sleeve 24 about the seedlings' roots. The root plug together with the surrounding sleeve 24 is then transplanted into container 18. The seedling roots are of course free to grow out and away from sleeve 24 and eventually overrun the sleeve which may be discarded. It will be appreciated that the method illustrated in Figure 2 easily lends itself to high speed mechanized transplanting methods resulting in great cost savings.

Obviously, the method of Figure 2 requires that the magazine cutting step be performed which results in the destruction of magazine 2.

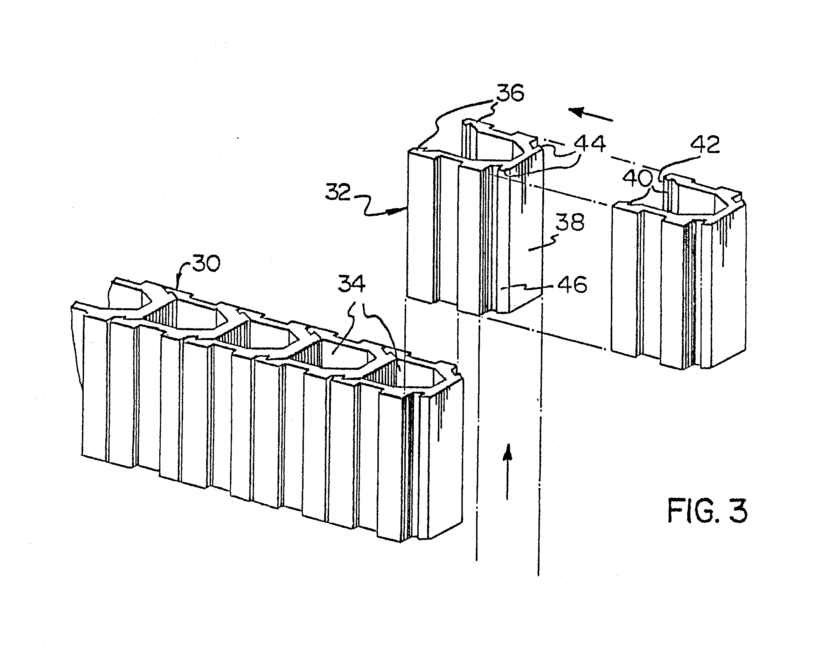

With reference now to Figure 3, there is illustrated a somewhat different magazine the units of which snap togethe and slide apart to eliminate the cutting step and which are therefore reusable.

Magazine 30 comprises a plurality of generally U or channel-shaped units 32 which snap together to form a row of soil and seed receiving cells 34.

Each unit 32 includes opposing sides 36 and an interconnecting end wall 38 which together define a channel-shaped structure. The outer edges of sides 36 include integrally formed inwardly directed flanges 40 having inwardly tapering surfaces 42. Flanges 40 engage outwardly directed flanges 44 integrally formed onto end wall 38 of an adjacent unit, flanges 44 having correspondingly tapered surfaces 46 which cooperate with faces 42 to cause the outer edges of sides 36 to spread apart a bit to facilitate the snap-together fit of flanges 40 and 44.

The units are disconnected by sliding one past the other and it will be appreciated that this type of unit is conducive to a fully automated transplanting system.

In other respects, the function and manner of use of units 32 is the same as that described above with respect to the system of Figure 2. Each of cells 34 are filled with peat or soil and a single seed is implanted therein. When ready, the seedling is transplanted to a transplant container with sleeve 32 remaining on the root plug. The units 32 may be retrieved at the time of transplanting or at some time thereafter and snapped back together for reuse.

It will be appreciated that the invention may be modified in various ways without departing from the spirit and scope thereof.

The embodiments of the invention in which an exclusive property or privilege is claimed are defined as follows:

1. Apparatus for cultivating seedlings comprising: a plurality of cells connectable to one another to form an integral row of cells, each of said cells being open at at least one end thereof for receiving a seed and a growth supporting medium therein to promote the growth of a seedling from said seed without interlocking of the seedling roots.

2. The apparatus of claim 1 wherein said cells comprise elongated units having opposed longitudinally extending side surfaces interconnected by a longitudinally extending end surface to define a generally channel-shaped member, the open sides of each of said channel-shaped structures being adapted to slidably, releasably grip the end surface of an adjacent channel-shaped member to form said row of cells.

3. The apparatus of claim 2 wherein said channel-shaped members are so shaped and structured to snap together and to slide apart by longitudinal movement of one of said members relative to the other.

4. The apparatus of claim 3 wherein the edges of said side surfaces defining the open end of said channel-shaped member include longitudinally extending flanges formed thereon for engaging oppositely facing flanges formed along the end surface of said adjacent member.

5. The apparatus of claim 1 wherein said cells comprise elongated generally rectangular hollow members interconnected to one another to form said row of cells, said cells being arranged such that the longitudinal axes thereof parallel one another.

6. The apparatus of claim 1 wherein said row of cells comprises two parallel, spaced apart elongated side walls and a plurality of evenly spaced apart partitioning walls extending transversely therebetween to define said plurality of cells.

7. A method of cultivating seeds and transplanting the seedlings therefrom to a transplant container comprising the steps of:

depositing a seed and a growth supporting medium into self-contained cells connected to one another to form a row of said cells, said cells being open at at least one end thereof;

promoting the growth of a seedling from said seed; and

transplanting said seedlings to said transplant container for further growth thereof.

8. The method of claim 7 wherein said step of transplanting said seedling includes the additional steps of cutting each of said cells open for removing said seedling therefrom prior to transplanting in said transplant container

9. The method of claim 8 wherein each of said cells is cut open along its longitudinal length in the surface thereof forming part of one of the longutidinally extending sides of said row of cells, said row of cells being bendable to cause a spreading apart of said cut surface to facilitate the removal of said seedling.

10. The method of claim 9 wherein each of said cells is cut open by removing a lengthwise segment of said surface thereof.

11.   The method of claim 7 wherein said step of transplanting said seedlings comprises severing said cells from one another and transplanting said seedlings into the transplant container together with the surrounding portion of said severed cell.

12.   The method of claim 11 wherein said cells are severed by a cutting apart thereof.

13.   The method of claim 11 wherein said cells are slidingly connected together and are severed by a sliding apart movement of one cell relative to another.

FIG.1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 006 558 (NEDDO) <br><br> * Whole document * | 1,5,6, 7 | A 01 G    9/10 |
| A | | 2 | |
| X | GB-A-1 404 101 (PIERLOT) <br><br> * Whole document * | 1,7,8, 11 | |

TECHNICAL FIELDS SEARCHED (Int. Cl. ³)

A 01 G    9/10

The present search report has been drawn up for all claims

| Place of search | Date of completion of the search | Examiner |
|---|---|---|
| THE HAGUE | 22-06-1984 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82